# EUROPÄISCHE PATENTSCHRIFT

(11) **EP 2 935 145 B1**
(45) Veröffentlichungstag und Bekanntmachung des Hinweises auf die Patenterteilung: **13.05.2020**
(21) Anmeldenummer: 12808825.9
(22) Anmeldetag: 20.12.2012
(51) Int. Cl.: C04B 28/04

(54) **BAUSTOFFZUSAMMENSETZUNG ZUR HERSTELLUNG EINES LEICHTBETONS**
BUILDING MATERIAL COMPOSITION FOR PRODUCING A LIGHTWEIGHT CONCRETE
COMPOSITION DE MATÉRIAUX DE CONSTRUCTION POUR LA PRÉPARATION D'UN BÉTON LEGER

(43) Veröffentlichungstag der Anmeldung: 28.10.2015
(73) Patentinhaber: Qim Projekt & Consult GmbH, 95615 Marktredwitz (DE)
(72) Erfinder: HOFFMANN, Raimund, 95632 Wunsiedel (DE)
(74) Vertreter: Hofstetter, Schurack & Partner
(86) Internationale Anmeldenummer: PCT/EP2012/076511
(87) Internationale Veröffentlichungsnummer: WO 2014/094864

(56) Entgegenhaltungen:
- EP-A1- 1 156 022
- EP-A2- 2 418 187
- US-A- 4 407 676
- US-A1- 2002 117 086
- US-B1- 6 488 762
- US-B1- 6 773 500

## Beschreibung

Die Erfindung betrifft eine Baustoffzusammensetzung zur Herstellung eines Leichtbetons sowie die Verwendung einer solchen Baustoffzusammensetzung zur Herstellung eines Leichtbetons.

Aus dem Stand der Technik ist die Verwendung von faserhaltigem Beton zur Herstellung von Bauelementen für unterschiedliche bauliche Anlagen bekannt. Durch die Beigabe von Stahlfasern wird dabei der an sich spröde Baustoff Beton duktiler und erhält eine höhere Zugfestigkeit. Die Fasern wirken über den gesamten Bauteilquerschnitt gegen Rissbildung und hindern entstehende Mikrorisse an der Bauelementoberfläche in ihrer Entwicklung. Derartige Betone werden daher insbesondere im Zusammenhang mit Stahlbewehrung verwendet, um Rissbildung vorzubeugen und um einen besseren Kantensplitterschutz zu erhalten. Wegen des geringen Querschnitts der dabei verwendeten Stahlfasern, können zudem korrosionsbedingte Abplatzungen des Betons deutlich verringert werden. Hierdurch eignet sich der faserhaltige Beton grundsätzlich für hochbelastete Bauwerke wie beispielsweise Brücken oder Bauwerke in Erdbebengebieten.

Als nachteilig an den bekannten faserhaltigen Betonen ist der Umstand anzusehen, dass diese ein vergleichsweise hohes spezifisches Gewicht von bis zu 2500 kg/m³ oder mehr besitzen und aus relativ komplexen Baustoffzusammensetzungen hergestellt werden müssen. Hierdurch fallen entsprechend hohe Infrastruktur-, Herstellungs- und Transportkosten an. Darüber hinaus führt das hohe spezifische Gewicht zu einem hohen Aufwand und entsprechenden Einschränkungen bei der statischen Auslegung von Bauwerken.

Aus der EP 2 418 187 A2 ist eine Baustoffzusammensetzung bekannt, welche Portlandzement, Additive, Microsilica, Verflüssiger, Porenbildner, Zeolithe und Polypropylen-Fasern umfasst.

Aus der US 2002/0117086 A1 ist eine Leichtbetonzusammensetzung bekannt, welche Zement, Binder, Fasern, kalkhaltige Substanzen, schwindreduzierende Substanzen, Gasbildner und Wasser enthält.

Aus der US 6 488 762 B1 ist eine Betonzusammensetzung bekannt, welche Zement, gemahlenes Glas, Zementersatz, kalkhaltige Substanzen, Gasbildner und Wasser enthält.

Die US 6 773 500 B1 offenbart eine Baustoffzusammensetzung, die Flugasche, Portlandzement, Fasern, einen aluminiumhaltigen Aktivator, CaCl₂ und Wasser enthält.

Die EP 1 156 022 A1 beschreibt eine Betonmischung, der Steinkohleflugasche und Kunststoff-Fasern aus Polypropylen beigemischt werden. Die Kunststoff-Fasern werden in der Betonmischung verteilt. Im Brandfall schmelzen oder verbrennen diese Kunststoff-Fasern durch die hohen Temperaturen.

Dokument US 4 407 676 A offenbart einen hydraulischer Zementmörtel, mit gleichmäßig dispergierten verstärkenden fibrillierten Kunststofffilamenten mit mikrofibrillierter Struktur und daraus hergestellten Elementen.

Aufgabe der vorliegenden Erfindung ist es, eine Baustoffzusammensetzung anzugeben, welche zur Herstellung eines faserhaltigen Leichtbetons geeignet und aus möglichst wenigen Komponenten herstellbar ist. Weitere Aufgaben der Erfindung bestehen darin, eine Verwendung einer solchen Baustoffzusammensetzung zur Herstellung eines Leichtbetons, einen entsprechenden Leichtbeton sowie ein Bauelement für ein Bauwerk anzugeben, das aus einer derartigen Baustoffzusammensetzung erhältlich ist.

Die Aufgaben werden erfindungsgemäß durch eine Baustoffzusammensetzung mit den Merkmalen des Patentanspruchs 1, durch die in Anspruch 10 angegebene Verwendung einer derartigen Baustoffzusammensetzung, durch einen Leichtbeton gemäß Anspruch 11 sowie durch ein Bauelement gemäß Anspruch 12 für ein Bauwerk gelöst. Vorteilhafte Ausgestaltungen mit zweckmäßigen Weiterbildungen der Erfindung sind in den Unteransprüchen angegeben, wobei vorteilhafte Ausgestaltungen der Baustoffzusammensetzung als vorteilhafte Ausgestaltungen des Leichtbetons und des Bauelements anzusehen sind.

Ein erster Aspekt der Erfindung betrifft eine Baustoffzusammensetzung zur Herstellung eines Leichtbetons mit den Merkmalen des Anspruchs 1. Erfindungsgemäß umfasst die Baustoffzusammensetzung wenigstens ein hydraulisches Bindemittel, wenigstens ein Additiv, wobei das Additiv zumindest Aluminium enthält, und Fasern mit einer Dichte von höchstens 7,2 g/cm³. Erfindungsgemäß enthält die Baustoffzusammensetzung zwischen 1,0 kg/m³ und 10,0 kg/m³ Fasern, wobei die Fasern eine mittlere Faserlänge zwischen 1 mm und 50 mm und eine mittlere Faserdicke zwischen 5 µm und 600 µm aufweisen. Dabei enthält das Additiv 30 Gew.-% bis 90 Gew.-% Kalk, 10 Gew.-% bis 30 Gew.-% Aluminium, 0 Gew.-% bis 25 Gew.-% eines Abbindebeschleunigers und 0 Gew.-% bis 25 Gew.-% Gips. Zudem ist das Aluminium mit einer Schutzschicht, insbesondere aus Stearin, einem Fett, einem Wachs und/oder Paraffin versehen. Die erfindungsgemäße Baustoffzusammensetzung umfasst mit anderen Worten neben einem einzelnen hydraulischen Bindemittel oder einem Gemisch mehrerer unterschiedlicher hydraulischer Bindemittel als Additiv zumindest Aluminium, welches beispielsweise in Form von Aluminiumpulver und/oder Aluminiumpaste vorgesehen sein bzw. verwendet werden kann. Aluminium fungiert dabei als Porenbildner und führt in Verbindung mit dem hydraulischen Bindemittel zur Ausbildung eines Schaum- oder Porenbetons. Durch die Verwendung von Fasern mit einer Dichte von höchstens 7,2 g/cm³, das heißt die Verwendung von Fasern mit einem deutlich geringeren spezifischen Gewicht als Eisen- oder Stahlfasern, kann in Verbindung mit der durch Reaktionen des Aluminium bewirkten Porenbildung ein faserhaltiger Leichtbeton, der auch als Poren- oder Schaumbeton bezeichnet werden kann, hergestellt werden, der im Unterschied zu bekanntem Stahlfaserbeton mit deutlich geringerem Materialeinsatz eine wesentlich geringere Trockenrohdichte von bis zu 450 kg/m³ oder weniger bei vergleichbar hohen Festigkeitswerten aufweist. Unter einer Dichte von höchstens 7,2 g/cm³ sind dabei beispielsweise Werte von 1,0 g/cm³, 1,1 g/cm³, 1,2 g/cm³, 1,3 g/cm³, 1,4 g/cm³, 1,5 g/cm³, 1,6 g/cm³, 1,7 g/cm³, 1,8 g/cm³, 1,9 g/cm³, 2,0 g/cm³, 2,1 g/cm³, 2,2 g/cm³, 2,3 g/cm³, 2,4 g/cm³, 2,5 g/cm³, 2,6 g/cm³, 2,7 g/cm³, 2,8 g/cm³, 2,9 g/cm³, 3,0 g/cm³, 3,1 g/cm³, 3,2 g/cm³, 3,3 g/cm³, 3,4 g/cm³, 3,5 g/cm³, 3,6 g/cm³, 3,7 g/cm³, 3,8 g/cm³, 3,9 g/cm³, 4,0 g/cm³, 4,1 g/cm³, 4,2 g/cm³, 4,3 g/cm³, 4,4 g/cm³, 4,5 g/cm³, 4,6 g/cm³, 4,7 g/cm³, 4,8 g/cm³, 4,9 g/cm³, 5,0 g/cm³, 5,1 g/cm³, 5,2 g/cm³, 5,3 g/cm³, 5,4 g/cm³, 5,5 g/cm³, 5,6 g/cm³, 5,7 g/cm³, 5,8 g/cm³, 5,9 g/cm³, 6,0 g/cm³, 6,1 g/cm³, 6,2 g/cm³, 6,3 g/cm³, 6,4 g/cm³, 6,5 g/cm³, 6,6 g/cm³, 6,7 g/cm³, 6,8 g/cm³, 6,9 g/cm³, 7,0 g/cm³, 7,1 g/cm³ oder 7,2 g/cm³ zu verstehen. Die Trockenrohdichte kann beispielsweise nach DIN EN 992 bestimmt werden und stellt einen Mittelwert mit definierten Abweichungen dar, die ausgehend vom Mittelwert maximal ±150 kg/m³ betragen. Die Reaktion der Porenbildung kann beispielsweise durch Messung der gebildeten Gasmenge oder durch Messung der Volumenzunahme ermittelt bzw. verfolgt werden. Durch die genannten Eigenschaften der Baustoffzusammensetzung werden neben entsprechend geringen Herstellungs- und Transportkosten auch Einsparung bei Infrastrukturkosten wie z. B. beim Transport leichterer Fertigbetonteile von der Produktionsstätte zur Baustelle oder der Kran-Tonnage, die pro bewegtes Gewicht abgerechnet wird, erzielt. Alternativ kann beispielsweise bei einem vorgegebenen Preis pro Kubikmeter im Vergleich zu herkömmlichen Baustoffzusammensetzungen ein höherwertiges hydraulisches Bindemittel verwendet werden. Durch die Faserverstärkung eines aus der erfindungsgemäßen Baustoffzusammensetzung hergestellten Leichtbetons werden zudem verschiedene Vorteile im Hinblick auf Brandschutz, Erdbebenschutz, Unwetterschutz, Wärmeschutz, Schallschutz und Schutz bei ballistischer Einwirkung oder dergleichen erzielt. Beispielsweise werden im Brandfall oder bei schneller Aufheizung des Leichtbetons mögliche Abplatzungen am Beton verhindert oder zumindest deutlich reduziert und verlangsamt. Ursache hierfür ist unter anderem die um mindestens eine Zehnerpotenz bessere Gasdurchlässigkeit des porenhaltigen Leichtbetons verglichen mit üblichen Stahlfaserbetonen. Die eingemischten Fasern erleichtern zudem die Bildung von Mikrokanälen zum besseren Entweichen von Wasserdampf oder sonstigen Gasen. Durch den Einsatz von Fasern wird zudem die Duktilität, also der Wert für die plastische Verformung erhöht und damit die Zähigkeit bei dynamischen Einwirkungen, wie etwa Beanspruchung durch aufprallende Massen, Explosionen, Erdbeben, etc. erheblich verbessert. In einfachster Ausgestaltung der Erfindung kann dabei vorgesehen sein, dass die erfindungsgemäße Baustoffzusammensetzung nur aus den drei genannten Komponenten besteht. Die erfindungsgemäße Baustoffzusammensetzung eignet sich für unterschiedlichste Anwendungszwecke und kann etwa für den Hochbau, beispielsweise für Fassadenelemente, für den Industriebau, beispielsweise für Industrieböden, für den Verkehrswegebau, beispielsweise für den Straßenunterbau, für den nicht konstruktiven Sonderbau, beispielsweise für Auffangwannen oder Betonrinnen, für den nicht konstruktiven Tiefbau, beispielsweise für verlorene Schalung, Brückenkappen oder Bahnsteigkanten, zur Herstellung von Designelementen, beispielsweise Designfassaden, Designbauelemente und dergleichen, für stationäre oder mobile Bauten für Krisen- oder Katastrophengebiete, sowie für Bauwerke oder Verkleidungsteile in Kriegsgebieten als ballistischer Schutz und Splitterschutz etc verwendet werden. Aufgrund der geringen Anzahl an Komponenten und der geringeren Dichte eignet sich die erfindungsgemäße Baustoffzusammensetzung auch für die Verwendung in mobilen Mischanlagen, wodurch beispielsweise Verkehrswege oder Bauten in Krisen- und Katastrophengebieten entsprechend schnell hergestellt werden können. Weitere Einsatzmöglichkeiten sind die Herstellung tragender Wände, die Herstellung von Tunnelelementen in Fertigbauweise sowie die Herstellung statischer Fassadenelemente für den Wohn- und Industriebau. Unter einem Anteil zwischen 1,0 kg/m³ und 10,0 kg/m³ Fasern sind bezogen auf die gesamte Baustoffzusammensetzung insbesondere Faseranteile von 1,0 kg/m³, 1,1 kg/m³, 1,2 kg/m³, 1,3 kg/m³, 1,4 kg/m³, 1,5 kg/m³, 1,6 kg/m³, 1,7 kg/m³, 1,8 kg/m³, 1,9 kg/m³, 2,0 kg/m³, 2,1 kg/m³, 2,2 kg/m³, 2,3 kg/m³, 2,4 kg/m³, 2,5 kg/m³, 2,6 kg/m³, 2,7 kg/m³, 2,8 kg/m³, 2,9 kg/m³, 3,0 kg/m³, 3,1 kg/m³, 3,2 kg/m³, 3,3 kg/m³, 3,4 kg/m³, 3,5 kg/m³, 3,6 kg/m³, 3,7 kg/m³, 3,8 kg/m³, 3,9 kg/m³, 4,0 kg/m³, 4,1 kg/m³, 4,2 kg/m³, 4,3 kg/m³, 4,4 kg/m³, 4,5 kg/m³, 4,6 kg/m³, 4,7 kg/m³, 4,8 kg/m³, 4,9 kg/m³, 5,0 kg/m³, 5,1 kg/m³, 5,2 kg/m³, 5,3 kg/m³, 5,4 kg/m³, 5,5 kg/m³, 5,6 kg/m³, 5,7 kg/m³, 5,8 kg/m³, 5,9 kg/m³, 6,0 kg/m³, 6,1 kg/m³, 6,2 kg/m³, 6,3 kg/m³, 6,4 kg/m³, 6,5 kg/m³, 6,6 kg/m³, 6,7 kg/m³, 6,8 kg/m³, 6,9 kg/m³, 7,0 kg/m³, 7,1 kg/m³, 7,2 kg/m³, 7,3 kg/m³, 7,4 kg/m³, 7,5 kg/m³, 7,6 kg/m³, 7,7 kg/m³, 7,8 kg/m³, 7,9 kg/m³, 8,0 kg/m³, 8,1 kg/m³, 8,2 kg/m³, 8,3 kg/m³, 8,4 kg/m³, 8,5 kg/m³, 8,6 kg/m³, 8,7 kg/m³, 8,8 kg/m³, 8,9 kg/m³, 9,0 kg/m³, 9,1 kg/m³, 9,2 kg/m³, 9,3 kg/m³, 9,4 kg/m³, 9,5 kg/m³, 9,6 kg/m³, 9,7 kg/m³, 9,8 kg/m³, 9,9 kg/m³ oder 10,0 kg/m³ sowie entsprechende Zwischenwerte zu verstehen. Hierdurch kann die Baustoffzusammensetzung optimal an ihren jeweiligen Einsatzzweck sowie an die Art und Beschaffenheit der verwendeten Fasern angepasst werden. Weitere Vorteile ergeben sich, indem die Fasern eine mittlere Faserlänge zwischen 1 mm und 50 mm und eine mittlere Faserdicke zwischen 5 µm und 600 µm aufweisen. Auf diese Weise können die mechanischen Eigenschaften eines aus der Baustoffzusammensetzung hergestellten Leichtbetons besonders präzise eingestellt und optimal an den jeweiligen Verwendungszweck angepasst werden. Faserlängen zwischen 1 mm und 50 mm bezeichnen dabei insbesondere Faserlängen von 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm oder 50 mm sowie entsprechende Zwischenwerte. Faserdicken zwischen 5 µm und 600 µm bezeichnen beispielsweise 5 µm, 15 µm, 25 µm, 35 µm, 45 µm, 55 µm, 65 µm, 75 µm, 85 µm, 95 µm, 105 µm, 115 µm, 125 µm, 135 µm, 145 µm, 155 µm, 165 µm, 175 µm, 185 µm, 195 µm, 205 µm, 215 µm, 225 µm, 235 µm, 245 µm, 255 µm, 265 µm, 275 µm, 285 µm, 295 µm, 305 µm, 315 µm, 325 µm, 335 µm, 345 µm, 355 µm, 365 µm, 375 µm, 385 µm, 395 µm, 405 µm, 415 µm, 425 µm, 435 µm, 445 µm, 455 µm, 465 µm, 475 µm, 485 µm, 495 µm, 505 µm, 515 µm, 525 µm, 535 µm, 545 µm, 555 µm, 565 µm, 575 µm, 585 µm, 595 µm oder 600 µm sowie entsprechende Zwischenwerte wie beispielsweise 145 µm, 146 µm, 147 µm, 148 µm, 149 µm, 150 µm, 151 µm, 152 µm, 153 µm, 154 µm, 155 µm usw.

Erfindungsgemäß ist vorgesehen, dass das Additiv 30 Gew.-% bis 90 Gew.-% Kalk, 10 Gew.-% bis 30 Gew.-% Aluminium, 0 Gew.-% bis 25 Gew.-% des Abbindebeschleunigers und 0 Gew.-% bis 25 Gew.-% Gips enthält. Es versteht sich, dass sich die Gewichtsanteile der einzelnen Komponenten des Additivs immer und ausschließlich zu 100 % ergänzen. Unter einem Anteil von 30 Gew.-% bis 90 Gew.-% Kalk sind insbesondere Kalk-Anteile von 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 %, 90 % sowie entsprechende Zwischenwerte wie beispielsweise 50,0 %, 50,1 %, 50,2 %, 50,3 %, 50,4 %, 50,5 %, 50,6 %, 50,7 %, 50,8 %, 50,9 % etc. zu verstehen. Entsprechend sind unter Anteilen von 10 Gew.-% bis 30 Gew.-% Aluminium Aluminium-Anteile von 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, 30 % sowie entsprechende Zwischenwerte zu verstehen. Gewichtsanteile von 0 Gew.-% bis 25 Gew.-% an Abbindebeschleuniger und/oder Gips geben an, dass die Baustoffzusammensetzung frei von Abbindebeschleuniger bzw. Gips ausgebildet ist oder dass Abbindebeschleuniger bzw. Gips beispielsweise 1 Gew.-%, 2 Gew.-%, 3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-%, 13 Gew.-%, 14 Gew.-%, 15 Gew.-%, 16 Gew.-%, 17 Gew.-%, 18 Gew.-%, 19 Gew.-%, 20 Gew.-%, 21 Gew.-%, 22 Gew.-%, 23 Gew.-%, 24 Gew.-% oder 25 Gew.-% des Additivs ausmachen. Auch hier sind natürlich entsprechende Zwischenwerte wie beispielsweise 0,1 Gew.-%, 0,2 Gew.-%, 0,3 Gew.-%, 0,4 Gew.-%, 0,5 Gew.-%, 0,6 Gew.-%, 0,7 Gew.-%, 0,8 Gew.-%, 0,9 Gew.-%, 1,0 Gew.-% etc. als mitumfasst anzusehen. Auch hierdurch kann die Baustoffzusammensetzung optimal an den Einsatzzweck und die Anmischbedingungen des Leichtbetons angepasst werden. Das Abbindeverhalten eines aus der Baustoffzusammensetzung hergestellten Leichtbetons kann dadurch gezielt eingestellt werden, dass das Additiv neben Aluminium zusätzlich Kalk und/oder wenigstens einen Abbindebeschleuniger, insbesondere Calciumformiat, und/oder Gips, insbesondere Bassanit, enthält. Hierdurch kann die Baustoffzusammensetzung optimal auf verschiedene Parameter wie etwa Art und Menge der verwendeten Komponenten, Umgebungstemperatur, Temperatur des Anmischwassers, Anmischgeschwindigkeit, Abbindegeschwindigkeit etc. abgestimmt werden, so dass beispielsweise ein Einfallen eines aus der Baustoffzusammensetzung hergestellten Leichtbetons, eine nicht abgeschlossene Porenbildung und ähnliche Probleme besonders zuverlässig vermieden werden. Dabei kann grundsätzlich vorgesehen sein, dass das Additiv ausschließlich aus einer oder mehreren Verbindungen der Gruppe Aluminium, Kalk, Abbindebeschleuniger und Gips besteht und darüber hinaus keine weiteren Komponenten umfasst.

Erfindungsgemäß ist zudem vorgesehen, dass das Aluminium mit einer Schutzschicht, insbesondere aus Stearin, einem Fett, einem Wachs und/oder Paraffin versehen ist. Dies stellt eine besonders vorteilhafte Möglichkeit dar, um den Aluminium-Anteil der Baustoffzusammensetzung vor unerwünschter Oxidation zu schützen und somit die Lagerfähigkeit der Baustoffzusammensetzung zu verbessern. Darüber hinaus kann hierdurch gezielt Einfluss auf die Geschwindigkeit der Porenbildung genommen werden, so dass die Geschwindigkeit der Porenbildung und die Geschwindigkeit der Aushärtung der Baustoffzusammensetzung besonders präzise aneinander angepasst werden können. Verbindungen wie Stearin, Fett, Wachs und/oder Paraffin bieten dabei den Vorteil, dass sie insbesondere durch Wärmeeinwirkung die Oberfläche des Aluminiums wieder zur Reaktion freigeben können.

Weiterhin ist erfindungsgemäß vorgesehen, dass die Baustoffzusammensetzung bezogen auf das hydraulische Bindemittel zwischen 0,1 Gew.-% und 5,0 Gew.-% Additiv enthält. Unter einem Gewichtsanteil zwischen 0,1 Gew.-% und 5,0 Gew.-% sind bezogen auf das Gewicht des oder der hydraulische(n) Bindemittel(s) insbesondere Gewichtsanteile von 0,1 Gew.-%, 0,2 Gew.-%, 0,3 Gew.-%, 0,4 Gew.-%, 0,5 Gew.-%, 0,6 Gew.-%, 0,7 Gew.-%, 0,8 Gew.-%, 0,9 Gew.-%, 1,0 Gew.-%, 1,1 Gew.-%, 1,2 Gew.-%, 1,3 Gew.-%, 1,4 Gew.-%, 1,5 Gew.-%, 1,6 Gew.-%, 1,7 Gew.-%, 1,8 Gew.-%, 1,9 Gew.-%, 2,0 Gew.-%, 2,1 Gew.-%, 2,2 Gew.-%, 2,3 Gew.-%, 2,4 Gew.-%, 2,5 Gew.-%, 2,6 Gew.-%, 2,7 Gew.-%, 2,8 Gew.-%, 2,9 Gew.-%, 3,0 Gew.-%, 3,1 Gew.-%, 3,2 Gew.-%, 3,3 Gew.-%, 3,4 Gew.-%, 3,5 Gew.-%, 3,6 Gew.-%, 3,7 Gew.-%, 3,8 Gew.-%, 3,9 Gew.-%, 4,0 Gew.-%, 4,1 Gew.-%, 4,2 Gew.-%, 4,3 Gew.-%, 4,4 Gew.-%, 4,5 Gew.-%, 4,6 Gew.-%, 4,7 Gew.-%, 4,8 Gew.-%, 4,9 Gew.-% oder 5,0 Gew.-% sowie entsprechende Zwischenwerte des Additivs Aluminium oder der gemeinsame Gewichtsanteil von mehreren Additiven zu verstehen. Hierdurch wird in Abhängigkeit der konkreten Art und Zusammensetzung des hydraulischen Bindemittels eine optimale Porenbildung erzielt. Es ist dabei vorteilhaft, wenn die Reaktionen, die zur Porenbildung führen, und die Reaktionen, die zum Aushärtung des hydraulischen Bindemittels führen, aufeinander abgestimmt sind und vorzugsweise möglichst gleichzeitig beendet sind. Prozentuale Angaben sind im Rahmen der vorliegenden Erfindung grundsätzlich als Gewichtsprozente anzusehen, sofern nichts Gegenteiliges angegeben ist.

Weitere Vorteile ergeben sich, wenn die die Faser ausgewählt sind aus einer Gruppe, die Naturfasern, insbesondere Hanf-, Flachs-, Baumwoll-, Bambus-, Kenaf-, Ramie-, Holz-, Sisal-, Fibre-, Palm-, Kokos- und/oder Zellulosefasern, und/oder Fasern tierischen Ursprungs, insbesondere Wollen, Tierhaare und/oder Seiden, und/oder Chemiefasern, insbesondere Pflanzeneiweiß-, Aramid-, Kohlenstoff-, Polyacrylnitril-, Polyethylen-, Polypropylen- und/oder Polyvinylalkoholfasern, und/oder anorganische Fasern, insbesondere Glas-, Basalt-, Keramik-, Asbest- und/oder Nanotubefasern, umfasst.

In einer weiteren vorteilhaften Ausgestaltung der Erfindung ist vorgesehen, dass die Fasern lose Fasern und/oder Faserverbunde und/oder textile Fasern und/oder verfilzte Fasern und/oder Endlosfasern umfassen. Hierdurch können insbesondere die Zugfestigkeit und das Elastizitätsmodul eines aus der Baustoffzusammensetzung hergestellten Leichtbetons optimal an seinen jeweiligen Einsatzzweck angepasst werden. Unter dem Begriff textile Fasern sind insbesondere linienförmige textile Gebilde wie z. B. Garne und Zwirne, flächenförmige textile Gebilde wie z. B. Gewebe, Gewirke, Gestricke, Geflechte, Nähgewirke, Vliesstoffe und Filze und räumliche textile Gebilde (Körpergebilde) wie z. B. textile Schläuche oder textile Halbzeuge zu verstehen.

Es kann vorgesehen sein, dass als hydraulisches Bindemittel Zement verwendet wird. Zement ist ein hydraulisches Bindemittel, das heiß ein fein gemahlenes anorganisches Stoffgemisch, das mit Wasser gemischt Zementleim ergibt, welcher durch Hydratation erstarrt und aushärtet. Nach dem Erhärten bleibt Zement vorteilhafter Weise auch unter Wasser fest und raumbeständig. Zement ergibt bei entsprechender Dosierung und nach entsprechendem Mischen mit Wasser und gegebenenfalls mit Gesteinskörnung Beton, der ausreichend lange verarbeitbar sein muss, nach einer bestimmten Zeit ein festgelegtes Festigkeitsniveau erreichen und langfristig raumbeständig sein soll. Die hydraulische Erhärtung von Zement beruht vorwiegend auf der Hydratation von Calciumsilicaten, jedoch können auch andere chemische Verbindungen, wie z. B. Aluminate, an der Erhärtung beteiligt sein. Chemisch betrachtet besteht Zement hauptsächlich aus Calciumsilicat mit Anteilen an Aluminium- und Eisen-Verbindungen, das als kompliziertes Stoffgemisch vorliegt. Häufig enthält Zement auch Anteile an Sulfaten. Der Massenanteil an reaktionsfähigem Calciumoxid (CaO) und reaktionsfähigem Siliciumdioxid (SiO₂) sollte grundsätzlich 50 % oder mehr betragen, wobei die Anteile beispielsweise nach DIN EN 196-2 bestimmt werden können. Mögliche Zusammensetzungen, Anforderungen und Konformitätskriterien von Zement sind beispielsweise der DIN EN 197-1 zu entnehmen.

Es kann vorgesehen sein, dass der Zement nach 28 Tagen eine Normfestigkeit von mindestens 20 N/mm² aufweist und/oder dass der Zement Portlandzement umfasst und/oder dass der Zement wenigstens einer Norm aus der Gruppe DIN EN 197-1, CEM I, CEM II, CEM III, CEM IV und/oder CEM V entspricht und/oder dass der Zement der Festigkeitsklasse 42,5, 42,5 R, 52,5, 52,5 R oder höher angehört. Die Normfestigkeit kann nach DIN EN 196-1 bestimmt werden. Hierdurch werden vorteilhafterweise eine hohe Qualität der Baustoffzusammensetzung sowie eine hohe Druckfestigkeit eines aus der Baustoffzusammensetzung hergestellten Leichtbetons sichergestellt. Weiterhin können durch gezielte Auswahl des geeigneten Zements in Abhängigkeit der geforderten Qualität und Druckfestigkeit entsprechende Kostensenkungen erzielt werden. Beispielsweise können bei niedrigeren Anforderungen an Qualität und Druckfähigkeit entsprechende Zemente mit niedrigerer Festigkeitsklasse ausgewählt werden. Umgekehrt eignen sich Zemente mit höherer Festigkeitsklasse für Anwendungen, bei denen hohe Qualitäten und Druckfestigkeiten gefordert sind.

Weitere Vorteile ergeben sich, wenn die die Fasern eine runde und/oder mehreckige und/oder ovale Querschnittsgeometrie aufweisen. Auf diese Weise können die mechanischen Eigenschaften eines aus der Baustoffzusammensetzung hergestellten Leichtbetons besonders präzise eingestellt und optimal an den jeweiligen Verwendungszweck angepasst werden.

In einer weiteren vorteilhaften Ausgestaltung der Erfindung ist vorgesehen, dass die Fasern eine Zugfestigkeit zwischen 200 N/mm² und 4500 N/mm² und/oder ein E-Modul zwischen 5000 N/mm² und 230000 N/mm² und/oder eine Bruchdehnung zwischen 5 %o und 150 %o und/oder eine Dichte zwischen 0,5 g/cm³ und 7,2 g/cm³ besitzen. Auch dies stellt eine vorteilhafte Möglichkeit dar, um die Eigenschaften des aus der Baustoffzusammensetzung angemischten Leichtbetons optimal an seinen jeweiligen Einsatzzweck anzupassen. Die Zugfestigkeit ist dabei die Spannung, die im Zugversuch aus der maximal erreichten Zugkraft bezogen auf den ursprünglichen Querschnitt der Faser errechnet wird. Zugfestigkeiten zwischen 200 N/mm² und 4500 N/mm² bezeichnen dabei beispielsweise Zugfestigkeiten von 200 N/mm², 400 N/mm², 600 N/mm², 800 N/mm², 1000 N/mm², 1200 N/mm², 1400 N/mm², 1600 N/mm², 1800 N/mm², 2000 N/mm², 2200 N/mm², 2400 N/mm², 2600 N/mm², 2800 N/mm², 3000 N/mm², 3200 N/mm², 3400 N/mm², 3600 N/mm², 3800 N/mm², 4000 N/mm², 4200 N/mm², 4400 N/mm² oder 4500 N/mm² sowie entsprechende Zwischenwerte wie beispielsweise 1000 N/mm², 1010 N/mm², 1020 N/mm², 1030 N/mm², 1040 N/mm², 1050 N/mm², 1060 N/mm², 1070 N/mm², 1080 N/mm², 1090 N/mm², 1100 N/mm², 1110 N/mm², 1120 N/mm², 1130 N/mm², 1140 N/mm², 1150 N/mm², 1160 N/mm², 1170 N/mm², 1180 N/mm², 1190 N/mm², 1200 N/mm² usw. Unter einem E-Modul (Elastizitätsmodul) zwischen 5000 N/mm² und 230000 N/mm² sind beispielsweise Elastizitätsmoduln von 5000 N/mm², 10000 N/mm², 15000 N/mm², 20000 N/mm², 25000 N/mm², 30000 N/mm², 35000 N/mm², 40000 N/mm², 45000 N/mm², 50000 N/mm², 55000 N/mm², 60000 N/mm², 65000 N/mm², 70000 N/mm², 75000 N/mm², 80000 N/mm², 85000 N/mm², 90000 N/mm², 95000 N/mm², 100000 N/mm², 105000 N/mm², 110000 N/mm², 115000 N/mm², 120000 N/mm², 125000 N/mm², 130000 N/mm², 135000 N/mm², 140000 N/mm², 145000 N/mm², 150000 N/mm², 155000 N/mm², 160000 N/mm², 165000 N/mm², 170000 N/mm², 175000 N/mm², 180000 N/mm², 185000 N/mm², 190000 N/mm², 195000 N/mm², 200000 N/mm², 205000 N/mm², 210000 N/mm², 215000 N/mm², 220000 N/mm², 225000 N/mm² oder 230000 N/mm² sowie entsprechende Zwischenwerte zu verstehen. Der Betrag des Elastizitätsmoduls ist grundsätzlich umso größer, je mehr Widerstand ein Material seiner Verformung entgegensetzt. Fasern mit hohem Elastizitätsmodul sind also steifer, während Fasern mit niedrigerem Elastizitätsmodul nachgiebiger sind. Die Bruchdehnung ist ein Materialkennwert, der die bleibende Verlängerung der Probe nach dem Bruch, bezogen auf die Anfangsmesslänge, angibt und charakterisiert die Verformungsfähigkeit (bzw. Duktilität) der Fasern. Bruchdehnungen zwischen 5 ‰ und 150 ‰ bezeichnen beispielsweise Bruchdehnungswerte von 5 %o, 10 ‰, 15 ‰, 20 ‰, 25 ‰, 30 ‰, 35 ‰, 40 ‰, 45 ‰, 50 ‰, 55 ‰, 60 ‰, 65 ‰, 70 ‰, 75 ‰, 80 ‰, 85 ‰, 90 ‰, 95 ‰, 100 ‰, 105 ‰, 110 ‰, 115 ‰, 120 ‰, 125 ‰, 130 ‰, 135 ‰, 140 ‰, 145 ‰, 150 %o sowie entsprechende Zwischenwerte. Unter einer Dichte zwischen 0,5 g/cm³ und 7,2 g/cm³ sind insbesondere Dichtewerte von 0,5 g/cm³, 0,6 g/cm³, 0,7 g/cm³, 0,8 g/cm³, 0,9 g/cm³, 1,0 g/cm³, 1,1 g/cm³, 1,2 g/cm³, 1,3 g/cm³, 1,4 g/cm³, 1,5 g/cm³, 1,6 g/cm³, 1,7 g/cm³, 1,8 g/cm³, 1,9 g/cm³, 2,0 g/cm³, 2,1 g/cm³, 2,2 g/cm³, 2,3 g/cm³, 2,4 g/cm³, 2,5 g/cm³, 2,6 g/cm³, 2,7 g/cm³, 2,8 g/cm³, 2,9 g/cm³, 3,0 g/cm³, 3,1 g/cm³, 3,2 g/cm³, 3,3 g/cm³, 3,4 g/cm³, 3,5 g/cm³, 3,6 g/cm³, 3,7 g/cm³, 3,8 g/cm³, 3,9 g/cm³, 4,0 g/cm³, 4,1 g/cm³, 4,2 g/cm³, 4,3 g/cm³, 4,4 g/cm³, 4,5 g/cm³, 4,6 g/cm³, 4,7 g/cm³, 4,8 g/cm³, 4,9 g/cm³, 5,0 g/cm³, 5,1 g/cm³, 5,2 g/cm³, 5,3 g/cm³, 5,4 g/cm³, 5,5 g/cm³, 5,6 g/cm³, 5,7 g/cm³, 5,8 g/cm³, 5,9 g/cm³, 6,0 g/cm³, 6,1 g/cm³, 6,2 g/cm³, 6,3 g/cm³, 6,4 g/cm³, 6,5 g/cm³, 6,6 g/cm³, 6,7 g/cm³, 6,8 g/cm³, 6,9 g/cm³, 7,0 g/cm³, 7,1 g/cm³, 7,2 g/cm³ zu verstehen. Hierdurch kann besonders leicht Einfluss auf die Trockenrohdichte der Baustoffzusammensetzung bzw. eines daraus hergestellten Leichtbetons genommen werden. Insbesondere Naturfasern, Kunstfasern und anorganische Fasern bieten den Vorteil besonders geringer Dichtewerte von höchstens etwa 3,5 g/cm³ und weisen damit wesentlich niedrigere Werte als beispielsweise Stahlfasern auf.

Es kann vorgesehen sein, dass die Baustoffzusammensetzung bezogen auf das hydraulische Bindemittel zwischen 0,01 Gew.-% und 0,5 Gew.-% Verflüssiger enthält. Verflüssiger oder Fließmittel, die oft auch als Plastifikatoren, Superplastifikatoren oder Superverflüssiger bezeichnet werden, verbessern die Fließfähigkeit des aus der Baustoffzusammensetzung angemischten Leichtbetons und verbessern daher bei gleichem Wasser-Zement-Wert die Verarbeitbarkeit des Leichtbetons bzw. vermindern bei gleicher Verarbeitbarkeit den Wasseranspruch und damit den Wasser-Zement-Wert, was zu einer Erhöhung der Druckfestigkeit und der Dichtigkeit führt. Eine Kombination der beiden Varianten ist ebenfalls denkbar. Ein auf das hydraulische Bindemittel bezogener Gewichtsanteil von 0,01 Gew.-% und 0,5 Gew.-% bezeichnet dabei beispielsweise Gewichtsanteile von 0,01 Gew.-%, 0,02 Gew.-%, 0,03 Gew.-%, 0,04 Gew.-%, 0,05 Gew.-%, 0,06 Gew.-%, 0,07 Gew.-%, 0,08 Gew.-%, 0,09 Gew.-%, 0,10 Gew.-%, 0,11 Gew.-%, 0,12 Gew.-%, 0,13 Gew.-%, 0,14 Gew.-%, 0,15 Gew.-%, 0,16 Gew.-%, 0,17 Gew.-%, 0,18 Gew.-%, 0,19 Gew.-%, 0,20 Gew.-%, 0,21 Gew.-%, 0,22 Gew.-%, 0,23 Gew.-%, 0,24 Gew.-%, 0,25 Gew.-%, 0,26 Gew.-%, 0,27 Gew.-%, 0,28 Gew.-%, 0,29 Gew.-%, 0,30 Gew.-%, 0,31 Gew.-%, 0,32 Gew.-%, 0,33 Gew.-%, 0,34 Gew.-%, 0,35 Gew.-%, 0,36 Gew.-%, 0,37 Gew.-%, 0,38 Gew.-%, 0,39 Gew.-%, 0,40 Gew.-%, 0,41 Gew.-%, 0,42 Gew.-%, 0,43 Gew.-%, 0,44 Gew.-%, 0,45 Gew.-%, 0,46 Gew.-%, 0,47 Gew.-%, 0,48 Gew.-%, 0,49 Gew.-% oder 0,50 Gew.-%.

Weitere Vorteile ergeben sich, wenn der Verflüssiger ein Melaminsulfonat und/oder ein Melaminsulfonat-Derivat umfasst. Hierdurch wird die Oberflächenspannung des vorhandenen Wassers herabgesetzt und eine Schmierwirkung bewirkt. Zusätzlich wird eine Dispergierung und Zerstreuung von Zementagglomeraten erleichtert, wodurch eine gleichmäßigere Verteilung von Zementpartikeln und Fasern ermöglicht wird. Alternativ oder zusätzlich können als Verflüssiger grundsätzlich auch Ligninsulfonate, Naphthalin-Formaldehyd-Sulfonate, Polycarboxylate und/oder Hydroxycarbonsäuren und deren Salze verwendet werden.

Es kann vorgesehen sein, dass die Baustoffzusammensetzung bezogen auf das hydraulische Bindemittel 0,5 Gew.-% bis 6,0 Gew.-% Microsilica enthält. Hierdurch können die Festigkeitswerte eines aus der Baustoffzusammensetzung hergestellten Leichtbetons zusätzlich verbessert werden. Das Microsilica wird vorzugsweise als Suspension zugegeben, um eine präzise Dosierung zu ermöglichen und eine möglichst gute und schnelle Dispersion sicherzustellen. Der verbesserte Zusammenhalt der Baustoff-Masse verhindert zudem das unerwünschte Entweichen von Luftporen sowie die nachträgliche Veränderung des Porengehaltes des Leichtbetons. Beispielsweise kann die Baustoffzusammensetzung bezogen auf das hydraulische Bindemittel 0,5 Gew.-%, 0,6 Gew.-%, 0,7 Gew.-%, 0,8 Gew.-%, 0,9 Gew.-%, 1,0 Gew.-%, 1,1 Gew.-%, 1,2 Gew.-%, 1,3 Gew.-%, 1,4 Gew.-%, 1,5 Gew.-%, 1,6 Gew.-%, 1,7 Gew.-%, 1,8 Gew.-%, 1,9 Gew.-%, 2,0 Gew.-%, 2,1 Gew.-%, 2,2 Gew.-%, 2,3 Gew.-%, 2,4 Gew.-%, 2,5 Gew.-%, 2,6 Gew.-%, 2,7 Gew.-%, 2,8 Gew.-%, 2,9 Gew.-%, 3,0 Gew.-%, 3,1 Gew.-%, 3,2 Gew.-%, 3,3 Gew.-%, 3,4 Gew.-%, 3,5 Gew.-%, 3,6 Gew.-%, 3,7 Gew.-%, 3,8 Gew.-%, 3,9 Gew.-%, 4,0 Gew.-%, 4,1 Gew.-%, 4,2 Gew.-%, 4,3 Gew.-%, 4,4 Gew.-%, 4,5 Gew.-%, 4,6 Gew.-%, 4,7 Gew.-%, 4,8 Gew.-%, 4,9 Gew.-%, 5,0 Gew.-%, 5,1 Gew.-%, 5,2 Gew.-%, 5,3 Gew.-%, 5,4 Gew.-%, 5,5 Gew.-%, 5,6 Gew.-%, 5,7 Gew.-%, 5,8 Gew.-%, 5,9 Gew.-% oder 6,0 Gew.-% Microsilica enthalten.

Es kann vorgesehen sein, dass die Baustoffzusammensetzung bezogen auf das hydraulische Bindemittel 0,5 Gew.-% bis 7,0 Gew.-% Kalkhydrat und/oder Branntkalk enthält. Durch die Zugabe des Bindemittels Kalkhydrat und/oder Branntkalk kann insbesondere der Wasserfeststoffwert der Baustoffzusammensetzung besonders präzise eingestellt werden. Beispielsweise kann die Baustoffzusammensetzung hierbei 0,5 Gew.-%, 0,6 Gew.-%, 0,7 Gew.-%, 0,8 Gew.-%, 0,9 Gew.-%, 1,0 Gew.-%, 1,1 Gew.-%, 1,2 Gew.-%, 1,3 Gew.-%, 1,4 Gew.-%, 1,5 Gew.-%, 1,6 Gew.-%, 1,7 Gew.-%, 1,8 Gew.-%, 1,9 Gew.-%, 2,0 Gew.-%, 2,1 Gew.-%, 2,2 Gew.-%, 2,3 Gew.-%, 2,4 Gew.-%, 2,5 Gew.-%, 2,6 Gew.-%, 2,7 Gew.-%, 2,8 Gew.-%, 2,9 Gew.-%, 3,0 Gew.-%, 3,1 Gew.-%, 3,2 Gew.-%, 3,3 Gew.-%, 3,4 Gew.-%, 3,5 Gew.-%, 3,6 Gew.-%, 3,7 Gew.-%, 3,8 Gew.-%, 3,9 Gew.-%, 4,0 Gew.-%, 4,1 Gew.-%, 4,2 Gew.-%, 4,3 Gew.-%, 4,4 Gew.-%, 4,5 Gew.-%, 4,6 Gew.-%, 4,7 Gew.-%, 4,8 Gew.-%, 4,9 Gew.-%, 5,0 Gew.-%, 5,1 Gew.-%, 5,2 Gew.-%, 5,3 Gew.-%, 5,4 Gew.-%, 5,5 Gew.-%, 5,6 Gew.-%, 5,7 Gew.-%, 5,8 Gew.-%, 5,9 Gew.-%, 6,0 Gew.-%, 6,1 Gew.-%, 6,2 Gew.-%, 6,3 Gew.-%, 6,4 Gew.-%, 6,5 Gew.-%, 6,6 Gew.-%, 6,7 Gew.-%, 6,8 Gew.-%, 6,9 Gew.-% oder 7,0 Gew.-% Kalkhydrat und/oder Branntkalk enthalten.

In einer vorteilhaften Ausgestaltung der Erfindung ist vorgesehen, dass die Baustoffzusammensetzung bezogen auf das hydraulische Bindemittel 0,01 Gew.-% bis 3,0 Gew.-% Polyvinylalkohol enthält. Dies erlaubt nach dem Anmischen der Baustoffzusammensetzung eine besonders präzise Einstellung des Expansionsverhaltens und der Steighöhe des entstehenden Leichtbetons während der Porenbildung. Beispielsweise kann die Baustoffzusammensetzung 0,01 Gew.-%, 0,1 Gew.-%, 0,2 Gew.-%, 0,3 Gew.-%, 0,4 Gew.-%, 0,5 Gew.-%, 0,6 Gew.-%, 0,7 Gew.-%, 0,8 Gew.-%, 0,9 Gew.-%, 1,0 Gew.-%, 1,1 Gew.-%, 1,2 Gew.-%, 1,3 Gew.-%, 1,4 Gew.-%, 1,5 Gew.-%, 1,6 Gew.-%, 1,7 Gew.-%, 1,8 Gew.-%, 1,9 Gew.-%, 2,0 Gew.-%, 2,1 Gew.-%, 2,2 Gew.-%, 2,3 Gew.-%, 2,4 Gew.-%, 2,5 Gew.-%, 2,6 Gew.-%, 2,7 Gew.-%, 2,8 Gew.-%, 2,9 Gew.-% oder 3,0 Gew.-% sowie entsprechende Zwischenwerte an Polyvinylalkohol enthalten.

Weitere Vorteile ergeben sich, wenn die Baustoffzusammensetzung bezogen auf das hydraulische Bindemittel 0,01 Gew.-% bis 1,0 Gew.-% Schaumbildner enthält. Dies verbessert insbesondere die Ausbildung von feinporigen, mechanisch stabilen und alkaliverträglichen Poren. Beispielsweise kann die Baustoffzusammensetzung 0,01 Gew.-%, 0,06 Gew.-%, 0,11 Gew.-%, 0,16 Gew.-%, 0,21 Gew.-%, 0,26 Gew.-%, 0,31 Gew.-%, 0,36 Gew.-%, 0,41 Gew.-%, 0,46 Gew.-%, 0,51 Gew.-%, 0,56 Gew.-%, 0,61 Gew.-%, 0,66 Gew.-%, 0,71 Gew.-%, 0,76 Gew.-%, 0,81 Gew.-%, 0,86 Gew.-%, 0,91 Gew.-%, 0,96 Gew.-% oder 1,0 Gew.-% sowie entsprechende Zwischenwerte an Schaumbildner enthalten.

Weitere Vorteile ergeben sich, wenn die Baustoffzusammensetzung bezogen auf das hydraulische Bindemittel 0,1 Gew.-% bis 2,0 Gew.-% Luftporenbildner enthält. Durch die Herabsetzung der Oberflächenspannung des Anmachwassers und durch die Bildung von Mikroluftporen während des Mischens werden hierdurch vorteilhaft eine gute Plastifizierung und ein besserer Zusammenhalt des gebildeten Leichtbetons erreicht, ohne dass nachteilige Einflüsse auf die Abbindevorgänge des Zementes auftreten. Zudem wird ein besonders homogenes Gefüge durch gleichmäßige Plastizität in der gesamten Baustoffzusammensetzung erreicht.

In einer weiteren vorteilhaften Ausgestaltung der Erfindung ist vorgesehen, dass die Baustoffzusammensetzung bezogen auf das hydraulische Bindemittel 0,1 Gew.-% bis 10,0 Gew.-% eines Leichtzuschlags und/oder eines porösen Kunststoffs, insbesondere Polystyrol enthält. Ein Lichtzuschlag ist ein Gemenge von ungebrochenen und/oder gebrochenen Körnern mit porigem Gefüge aus natürlichen und/oder künstlich hergestellten mineralischen Stoffen. Ein wichtiges Merkmal ist der deutliche Unterschied zwischen der Reindichte und der Rohdichte der Körner. Die teilweise für Beton mit dichtem Gefüge als Zuschlag verwendeten Kiessande haben eine Rohdichte von etwa 2,65 kg/dm³ und wegen ihres dichten Gefüges annähernd die gleiche Kornrohdichte. Die Rohdichte der Leichtzuschläge ist praktisch ebenso groß, die Reindichte ihrer Körner dagegen wesentlich niedriger. Die Kornrohdichte von Leichtzuschlägen schwankt beispielsweise zwischen 0,8 kg/dm³ und 1,7 kg/dm³. Das bedeutet, dass sie bezogen auf Ihr Gesamtvolumen einen Porenraum zwischen 70 Vol.-% und 35 Vol.-% aufweisen. Die Poren können gegeneinander abgeschlossen sein und/oder miteinander in Verbindung stehen. Alternativ oder zusätzlich zu mineralischen Leichtzuschlägen können im Rahmen der vorliegenden Erfindung auch "organische Leichtzuschläge", das heißt poröse Kunststoffe wie beispielsweise expandierte Polystyrol-Kügelchen oder dergleichen verwendet werden. Unter einem Gewichtsanteil zwischen 0,1 Gew.-% bis 10,0 Gew.-% sind insbesondere Gewichtsanteile von 0,1 Gew.-%, 0,2 Gew.-%, 0,3 Gew.-%, 0,4 Gew.-%, 0,5 Gew.-%, 0,6 Gew.-%, 0,7 Gew.-%, 0,8 Gew.-%, 0,9 Gew.-%, 1,0 Gew.-%, 1,1 Gew.-%, 1,2 Gew.-%, 1,3 Gew.-%, 1,4 Gew.-%, 1,5 Gew.-%, 1,6 Gew.-%, 1,7 Gew.-%, 1,8 Gew.-%, 1,9 Gew.-%, 2,0 Gew.-%, 2,1 Gew.-%, 2,2 Gew.-%, 2,3 Gew.-%, 2,4 Gew.-%, 2,5 Gew.-%, 2,6 Gew.-%, 2,7 Gew.-%, 2,8 Gew.-%, 2,9 Gew.-%, 3,0 Gew.-%, 3,1 Gew.-%, 3,2 Gew.-%, 3,3 Gew.-%, 3,4 Gew.-%, 3,5 Gew.-%, 3,6 Gew.-%, 3,7 Gew.-%, 3,8 Gew.-%, 3,9 Gew.-%, 4,0 Gew.-%, 4,1 Gew.-%, 4,2 Gew.-%, 4,3 Gew.-%, 4,4 Gew.-%, 4,5 Gew.-%, 4,6 Gew.-%, 4,7 Gew.-%, 4,8 Gew.-%, 4,9 Gew.-%, 5,0 Gew.-%, 5,1 Gew.-%, 5,2 Gew.-%, 5,3 Gew.-%, 5,4 Gew.-%, 5,5 Gew.-%, 5,6 Gew.-%, 5,7 Gew.-%, 5,8 Gew.-%, 5,9 Gew.-%, 6,0 Gew.-%, 6,1 Gew.-%, 6,2 Gew.-%, 6,3 Gew.-%, 6,4 Gew.-%, 6,5 Gew.-%, 6,6 Gew.-%, 6,7 Gew.-%, 6,8 Gew.-%, 6,9 Gew.-%, 7,0 Gew.-%, 7,1 Gew.-%, 7,2 Gew.-%, 7,3 Gew.-%, 7,4 Gew.-%, 7,5 Gew.-%, 7,6 Gew.-%, 7,7 Gew.-%, 7,8 Gew.-%, 7,9 Gew.-%, 8,0 Gew.-%, 8,1 Gew.-%, 8,2 Gew.-%, 8,3 Gew.-%, 8,4 Gew.-%, 8,5 Gew.-%, 8,6 Gew.-%, 8,7 Gew.-%, 8,8 Gew.-%, 8,9 Gew.-%, 9,0 Gew.-%, 9,1 Gew.-%, 9,2 Gew.-%, 9,3 Gew.-%, 9,4 Gew.-%, 9,5 Gew.-%, 9,6 Gew.-%, 9,7 Gew.-%, 9,8 Gew.-%, 9,9 Gew.-% oder 10,0 Gew.-% sowie entsprechende Zwischenwerte zu verstehen.

Weitere Vorteile ergeben sich, wenn der Leichtzuschlag ausgewählt ist aus einer Gruppe, die Naturbims, Lavaschlacken, Tuff, Blähton, Blähschiefer, Ziegelsplitt, Hüttenbims, gesinterte Steinkohlenflugasche, Blähperlit. Blähglas, Lava, Perlit und/oder Vermiculit umfasst. Hierdurch können regional vorkommende bzw. vor Ort erhältliche Leichtzuschläge vorteilhaft und kostensenkend zur Herstellung der erfindungsgemäßen Baustoffzusammensetzung werden.

Ein zweiter Aspekt der Erfindung betrifft die Verwendung einer Baustoffzusammensetzung nach einem der vorhergehenden Ausführungsbeispiele zum Herstellen eines Leichtbetons. Unter einem Leichtbeton wird im Rahmen der Erfindung ein Beton mit einer Trockenrohdichte von höchstens 2000 kg/m³, vorzugsweise höchstens 1000 kg/m³ und besonders bevorzugt von höchstens 600 kg/m³ verstanden, dessen inneres Gefüge so zusammengesetzt ist, dass ein Teil seines Volumens aus Poren besteht. Vorzugsweise machen die Poren des erfindungsgemäßen Leichtbetons mindestens 2 Vol.-%, vorzugsweise mindestens 3 Vol.-% und besonders bevorzugt mindestens 5 Vol.-% des Gesamtvolumens, das heißt beispielsweise 2 Vol.-%, 3 Vol.-%, 4 Vol.-%, 5 Vol.-%, 6 Vol.-%, 7 Vol.-%, 8 Vol.-%, 9 Vol.-%, 10 Vol.-%, 11 Vol.-%, 12 Vol.-%, 13 Vol.-%, 14 Vol.-%, 15 Vol.-%, 16 Vol.-%, 17 Vol.-%, 18 Vol.-%, 19 Vol.-%, 20 Vol.-% oder mehr aus. Die Poren können grundsätzlich gegeneinander abgeschlossen sein und/oder miteinander in Verbindung stehen. Weiterhin umfasst der erfindungsgemäße Leichtbeton Fasern mit einem spezifischen Gewicht von höchstens 7,2 g/cm³. Mit anderen Worten ist der der erfindungsgemäße Leichtbeton frei von Stahlfasern ausgebildet. Zum Herstellen des Leichtbetons kann die Baustoffzusammensetzung mit Ansetzwasser vermischt werden. Der Wasseranteil je Kubikmeter Baustoffzusammensetzung beträgt dabei üblicherweise zwischen etwa 200 kg und etwa 400 kg, also beispielsweise 200 kg, 210 kg, 220 kg, 230 kg, 240 kg, 250 kg, 260 kg, 270 kg, 280 kg, 290 kg, 300 kg, 310 kg, 320 kg, 330 kg, 340 kg, 350 kg, 360 kg, 370 kg, 380 kg, 390 kg oder 400 kg. Weitere Merkmale und deren Vorteile sind den vorhergehenden Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft einen Leichtbeton, der durch Vermischen einer Baustoffzusammensetzung nach einem der vorhergehenden Ausführungsbeispiele mit Anmachwasser erhältlich und/oder erhalten ist. Die sich hieraus ergebenden Merkmale und deren Vorteile sind den vorhergehenden Beschreibungen des ersten und des zweiten Erfindungsaspekts zu entnehmen, wobei vorteilhafte Ausgestaltungen des ersten und zweiten Erfindungsaspekts als vorteilhafte Ausgestaltungen des dritten Erfindungsaspekts und umgekehrt anzusehen sind.

Es kann die Verwendung einer Baustoffzusammensetzung nach einem der der vorhergehenden Ausführungsbeispiele und/oder eines Leichtbetons nach dem vorhergehenden Ausführungsbeispiel zum Herstellen wenigstens eines Bauelements für ein Bauwerk vorgesehen sein. Bei dem Bauelement kann es sich beispielsweise um ein Bauelement für den Hausbau, beispielsweise eine Wand und/oder Decke, eine Strebe, ein Bauelement für den Hochbau, beispielsweise ein Fassadenelement, ein Bauelement für den Industriebau, beispielsweise einen Industrieboden, ein Bauelement für den Verkehrswegebau, beispielsweise ein Straßenunterbau, ein Bauelement für den nicht konstruktiven Sonderbau, beispielsweise eine Auffangwanne oder eine Betonrinne, ein Bauelement für den nicht konstruktiven Tiefbau, beispielsweise ein Bauelement für verlorene Schalung, ein Bauelement für eine Brücke, beispielsweise eine Brückenkappe, ein Bauelement für den Bahnhofsbau, beispielsweise eine Bahnsteigkante, ein Bauelement zur Herstellung von Designelementen, beispielsweise ein Designfassadenteil und dergleichen, ein Bauelement für stationäre oder mobile Bauten für Krisen- oder Katastrophengebiete, sowie um ein Bauelement für Bauwerke oder Verkleidungsteile in Kriegsgebieten als ballistischer Schutz und Splitterschutz etc. handeln. Aufgrund der geringen Anzahl an Komponenten und des geringen spezifischen Gewichts der Baustoffzusammensetzung kann das Bauelement unter Verwendung mobiler Mischanlagen hergestellt werden, wodurch beispielsweise Verkehrswege oder Bauten in Krisen- und Katastrophengebieten entsprechend schnell hergestellt werden können. Weiterhin kann das Bauelement als tragende Wand, als Tunnelelement in Fertigbauweise sowie als statisches Fassadenelement für den Wohn- und Industriebau ausgebildet sein. Weitere Merkmale und deren Vorteile sind den Beschreibungen der vorhergehenden Erfindungsaspekte zu entnehmen.

Ein vierter Aspekt der Erfindung betrifft ein Bauelement für ein Bauwerk, welches durch Verwendung einer Baustoffzusammensetzung nach einem der vorhergehenden Ausführungsbeispiele und/oder durch Verwendung eines Leichtbetons nach einem der vorhergehenden Ausführungsbeispiele erhältlich und/oder erhalten ist. Die sich hieraus ergebenden Merkmale und deren Vorteile sind den vorhergehenden Beschreibungen des ersten, zweiten und dritten Erfindungsaspekts zu entnehmen, wobei vorteilhafte Ausgestaltungen des ersten, zweiten und dritten Erfindungsaspekts als vorteilhafte Ausgestaltungen des vierten Erfindungsaspekts und umgekehrt anzusehen sind.

Weitere Merkmale der Erfindung ergeben sich aus den Ansprüchen und den Ausführungsbeispielen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen.

Zur Herstellung einer erfindungsgemäßen Basis-Baustoffzusammensetzung wurden:
- Portlandzement;
- Aluminium als Additiv; und
- Fasern
miteinander vermischt. Dabei wurden für einzelne Baustoffzusammensetzungen unterschiedliche Portlandzemente der Festigkeitsklassen 42,5, 42,5 R, 52,5 oder 52,5 R verwendet. Das Aluminium wurde in Form von Aluminiumpulver oder Aluminiumpaste verwendet, um eine gute Durchmischung sicherzustellen. Das Additiv, welches in einfachster Ausgestaltung ausschließlich Aluminium enthält, wurde in Mengen zwischen 0,1% und 1,0% bezogen auf das Gewicht des Zements verwendet. Als Fasern wurden in unterschiedlichen Ausgestaltungen der Baustoffzusammensetzung mit Polypropylenfasern, Aramidfasern, Glasfasern oder Sisalfasern in einer jeweiligen Gesamtmenge von etwa 5 kg/m³ bezogen auf das Gesamtgewicht der Baustoffzusammensetzung verwendet. Die Fasern wiesen mittlere Faserlängen zwischen 5 mm und 20 mm auf. Die genannten Basis-Baustoffzusammensetzungen werden zum Herstellen eines Leicht- oder Schaumbetons mit etwa 100 kg bis 300 kg Anmachwasser pro Kubikmeter Baustoffzusammensetzung angemischt.

Ausgehend von der beschriebenen Basis- oder Grundmischung wurden verschiedene weitere Baustoffzusammensetzungen hergestellt, die zusätzlich eine oder mehrere Komponenten aus der Gruppe:
- Verflüssiger;
- Microsilica;
- Polyvinylalkohol;
- Schaumbildner; und
- Luftporenbildner
enthielten.

Als Verflüssiger wurde pulverförmiges Melaminsulfonat (Handelsname Melment F 10, BASF) in einer Menge zwischen 0,2% und 0,5% bezogen auf das Gewicht des Zements verwendet. Microsilica wurde in Mengen zwischen 1% und 5% bezogen auf das Gewicht des Zements verwendet. Polyvinylalkohol wurde in Mengen zwischen 0,01% und 2,5% bezogen auf das Gewicht des Zements verwendet. Als Schaumbildner wurde ein Produkt mit dem Handelsnamen Schaumbildner 285 (SB, BASF) in Mengen zwischen 0,1% und 1% verwendet. Als Luftporenbildner wurde eine Naturharzseife (Handelsname LP 70, BASF) in Mengen zwischen 1,0% und 2,0% bezogen auf das Gewicht des Zements verwendet.

Darüber hinaus wurden in weiteren Versuchen unterschiedliche Additive verwendet, die neben Aluminium zusätzlich eine oder mehrere Komponenten aus der Gruppe:
- Kalk;
- Abbindebeschleuniger; und
- Gips (als Bassanit)
enthielten. Beispielsweise wurde ein Additiv verwendet, das aus 46% Kalk, 22% Aluminium, 22% Ca-Formiat als Abbindebeschleuniger und 10% Gips-Halbhydrat (Bassanit) bestand. Andere verwendete Additive enthielten 56% Kalk, 22% Aluminium und 22% Abbindebeschleuniger oder 78% Kalk und 22% Aluminium.

Die einzelnen Baustoffzusammensetzungen wurden jeweils mit der entsprechenden Menge Ansetzwasser vermischt und nach dem Anmischen einerseits in runde Probenformen mit einem Durchmesser von ca. 50 cm und einer Höhe von ca. 25 cm und andererseits in eine rechtwinklige Schalung mit den ungefähren Dimensionen 1,00 m x 1,00 m x 30 cm (Länge x Breite x Höhe) gefüllt.

Nach 28 Tagen wurden die Druckfestigkeit und Rohdichte der ausgehärteten Leichtbetone ermittelt. Die ermittelten Rohdichten lagen zwischen etwa 0,45 g/cm³ (450 kg/m³) und etwa 0,90 g/cm³ (900 kg/m³). Die Druckfestigkeitswerte betrugen zwischen etwa 0,78 N/mm² und etwa 3,2 N/mm².

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Baustoffzusammensetzung zur Herstellung eines Leichtbetons, umfassend:
- ein hydraulisches Bindemittel,
- wenigstens ein Additiv, wobei das Additiv zumindest Aluminium enthält; und
- Fasern mit einer Dichte von höchstens 7,2 g/cm³, wobei die Baustoffzusammensetzung zwischen 1,0 kg/m³ und 10,0 kg/m³ Fasern enthält, wobei die Fasern eine mittlere Faserlänge zwischen 1 mm und 50 mm und eine mittlere Faserdicke zwischen 5 µm und 600 µm aufweisen und das Additiv:
- 30 Gew.-% bis 90 Gew.-% Kalk;
- 10 Gew.-% bis 30 Gew.-% Aluminium, wobei das Aluminium mit einer Schutzschicht, insbesondere aus Stearin, einem Fett, einem Wachs und/oder Paraffin versehen ist;
- 0 Gew.-% bis 25 Gew.-% eines Abbindebeschleunigers; und
- 0 Gew.-% bis 25 Gew.-% Gips
enthält,
wobei die Baustoffzusammensetzung bezogen auf das hydraulische Bindemittel zwischen 0,1 Gew.-% und 5,0 Gew.-% Additiv enthält.

2. Baustoffzusammensetzung nach Anspruch 1,
**dadurch gekennzeichnet, dass**
die Faser ausgewählt sind aus einer Gruppe, die Naturfasern, insbesondere Hanf-, Flachs-, Baumwoll-, Bambus-, Kenaf-, Ramie-, Holz-, Sisal-, Fibre-, Palm-, Kokos- und/oder Zellulosefasern, und/oder Fasern tierischen Ursprungs, insbesondere Wollen, Tierhaare und/oder Seiden, und/oder Chemiefasern, insbesondere Pflanzeneiweiß-, Aramid-, Kohlenstoff-, Polyacrylnitril-, Polyethylen-, Polypropylen- und/oder Polyvinylalkoholfasern, und/oder anorganische Fasern, insbesondere Glas-, Basalt-, Keramik-, Asbest- und/oder Nanotubefasern, umfasst.

3. Baustoffzusammensetzung nach Anspruch 1 oder 2,
**dadurch gekennzeichnet, dass**
die Fasern lose Fasern und/oder Faserverbunde und/oder textile Fasern und/oder verfilzte Fasern und/oder Endlosfasern umfassen.

4. Baustoffzusammensetzung nach Anspruch 1,
**dadurch gekennzeichnet, dass**
der Abbindebeschleuniger Calciumformiat ist und der Gips ein Bassanit ist.

5. Baustoffzusammensetzung nach einem der Ansprüche 1 bis 4,
**dadurch gekennzeichnet, dass**
die Fasern eine Zugfestigkeit zwischen 200 N/mm² und 4500 N/mm² und/oder ein E-Modul zwischen 5000 N/mm² und 230000 N/mm² und/oder eine Bruchdehnung zwischen 5 %o und 150 ‰ und/oder eine Dichte zwischen 0,5 g/cm³ und 7,2 g/cm³ besitzen.

6. Baustoffzusammensetzung nach einem der Ansprüche 1 bis 5,
**dadurch gekennzeichnet, dass**
diese bezogen auf das hydraulische Bindemittel 0,01 Gew.-% bis 3,0 Gew.-% Polyvinylalkohol enthält.

7. Baustoffzusammensetzung nach einem der Ansprüche 1 bis 6,
**dadurch gekennzeichnet, dass**
diese bezogen auf das hydraulische Bindemittel 0,01 Gew.-% bis 1,0 Gew.-% Schaumbildner und/oder 0,1 Gew.-% bis 2,0 Gew.-% Luftporenbildner enthält.

8. Baustoffzusammensetzung nach einem der Ansprüche 1 bis 7,
**dadurch gekennzeichnet, dass**
diese bezogen auf das hydraulische Bindemittel 0,1 Gew.-% bis 10,0 Gew.-% eines Leichtzuschlags und/oder eines porösen Kunststoffs, insbesondere Polystyrol enthält.

9. Baustoffzusammensetzung nach Anspruch 8,
**dadurch gekennzeichnet, dass**
der Leichtzuschlag ausgewählt ist aus einer Gruppe, die Naturbims, Lavaschlacken, Tuff, Blähton, Blähschiefer, Ziegelsplitt, Hüttenbims, gesinterte Steinkohlenflugasche, Blähperlit. Blähglas, Lava, Perlit und/oder Vermiculit umfasst.

10. Verwendung einer Baustoffzusammensetzung nach einem der Ansprüche 1 bis 9 zum Herstellen eines Leichtbetons.

11. Leichtbeton, erhältlich durch Vermischen einer Baustoffzusammensetzung nach einem der Ansprüche 1 bis 9 mit Anmachwasser.

12. Bauelement für ein Bauwerk, erhältlich durch Verwendung einer Baustoffzusammensetzung nach einem der Ansprüche 1 bis 9 und/oder durch Verwendung eines Leichtbetons nach Anspruch 11.

## Claims

1. A construction material composition for producing lightweight concrete, comprising:
- a hydraulic binder,
- at least one additive, wherein the additive contains at least aluminum; and
- fibers with a density of at most 7.2 g/cm³, wherein
the construction material composition contains between 1.0 kg/m³ and 10.0 kg/m³ of fibers, wherein the fibers have an average fiber length between 1 mm and 50 mm and an average fiber thickness between 5 µm and 600 µm, and the additive contains:
- 30 % by wt. to 90 % by wt. of lime;
- 10 % by wt. to 30 % by wt. of aluminum, wherein the aluminum is provided with a protective layer, in particular of stearin, a fat, a wax and/or paraffin;
- 0 % by wt. to 25 % by wt. of a curing accelerator; and
- 0 % by wt. to 25 % by wt. of gypsum,
wherein the construction material composition contains between 0.1 % by wt. and 5.0 % by wt. of additive related to the hydraulic binder.

2. The construction material composition according to claim 1,
**characterized in that**
the fibers are selected from a group including natural fibers, in particular hemp, flax, cotton, bamboo, kenaf, ramie, wood, sisal, fibre, palm, coconut and/or cellulose fibers, and/or fibers of animal origin, in particular wools, animal hair and/or silks, and/or chemical fibers, in particular plant protein, aramid, carbon, polyacrylonitrile, polyethylene, polypropylene and/or polyvinyl alcohol fibers, and/or inorganic fibers, in particular glass, basalt, ceramic, asbestos and/or nanotube fibers.

3. The construction material composition according to claim 1 or 2,
**characterized in that**
the fibers include loose fibers and/or fiber compounds and/or textile fibers and/or felted fibers and/or endless fibers.

4. The construction material composition according to claim 1,
**characterized in that**
the curing accelerator is calcium formate and the gypsum is a bassanite.

5. The construction material composition according to any one of claims 1 to 4,
**characterized in that**
the fibers have a tensile strength between 200 N/mm² and 4500 N/mm² and/or an E-modulus between 5000 N/mm² and 230000 N/mm² and/or an elongation at break between 5 ‰ and 150 ‰ and/or a density between 0.5 g/cm³ and 7.2 g/cm³.

6. The construction material composition according to any one of claims 1 to 5,
**characterized in that**
it contains 0.01 % by wt. to 3.0 % by wt. of polyvinyl alcohol related to the hydraulic binder.

7. The construction material composition according to any one of claims 1 to 6,
**characterized in that**
it contains 0.01 % by wt. to 1.0 % by wt. of foaming agent and/or 0.1 % by wt. to 2.0 % by wt. of air-entraining agent related to the hydraulic binder.

8. The construction material composition according to any one of claims 1 to 7,
**characterized in that**
it contains 0.1 % by wt. to 10.0 % by wt. of a lightweight aggregate and/or of a porous plastic, in particular polystyrene, related to the hydraulic binder.

9. The construction material composition according to claim 8,
**characterized in that**
the lightweight aggregate is selected from a group including natural pumice, lava slags, tuff, expanded clay, expanded slate, slate chippings, pumice slag, sintered coal fly ash, expanded perlite, foam glass, lava, perlite and/or vermiculite.

10. A use of a construction material composition according to any one of claims 1 to 9 for producing lightweight concrete.

11. A lightweight concrete obtainable by mixing a construction material composition according to any one of claims 1 to 9 with mixing water.

12. A component for a building, obtainable by use of a construction material composition according to any one of claims 1 to 9 and/or by use of a lightweight concrete according to claim 11.

## Revendications

1. Composition de matériaux de construction pour la préparation d'un béton léger comportant:
- un liant hydraulique,
- au moins un additif, dans laquelle l'additif contient au moins de l'aluminium; et
- des fibres ayant une masse volumique spécifique de 7,2 g/cm³ au maximum, dans lequel la composition de matériaux de construction contient des fibres entre 1,0 kg/m³ et 10,0 kg/m³, dans laquelle les fibres comportent une longueur moyenne de fibre entre 1 mm et 50 mm et une épaisseur moyenne de fibre entre 5 µm et 600 µm, et l'additif contient:
- 30 % en poids à 90 % en poids de chaux;
- 10 % en poids à 30 % en poids d'aluminium, dans laquelle l'aluminium est pourvu d'une couche protectrice, surtout de stéarine, de graisse, de cire et/ou de paraffine;
- 0 % en poids à 25 % en poids d'un accélérateur de prise; et
- 0 % en poids à 25 % en poids de plâtre,
dans laquelle la composition de matériaux de construction, par rapport au liant hydraulique, contient entre 0,1 % en poids et 5,0 % en poids d'additif.

2. Composition de matériaux de construction selon la revendication 1,
**caractérisée en ce que**
les fibres sont choisies parmi le groupe comportant des fibres naturelles, surtout des fibres de chanvre, des fibres de lin, des fibres de coton, des fibres de bambou, des fibres de kenaf, des fibres de ramie, des fibres de bois, des fibres de sisal, des fibres de fique, des fibres de palmier, des fibres de coco et / ou des fibres de cellulose, et / ou des fibres d'origine animale, surtout de la laine, du poil animal et / ou de la soie, et / ou des fibres chimiques, surtout des fibres de la protéine végétale, des fibres d'aramide, des fibres de carbone, des fibres de polyacrylonitrile, des fibres de polyéthylène, des fibres de polypropylène et / ou des fibres d'alcool polyvinylique, et / ou des fibres inorganiques, surtout des fibres optiques, des fibres de basalte, des fibres céramiques, des fibres d'amiante et / ou des fibres de nanotube.

3. Composition de matériaux de construction selon la revendication 1 ou 2,
**caractérisée en ce que**
les fibres comportent des fibres en vrac et / ou des composites de fibres et / ou des fibres textiles et / ou des fibres feutrées et / ou des fibres continues.

4. Composition de matériaux de construction selon la revendication 1,
**caractérisée en ce que**
l'accélérateur de prise est le formiate de calcium et que le plâtre est une bassanite.

5. Composition de matériaux de construction selon l'une quelconque des revendications 1 à 4,
**caractérisée en ce que**
les fibres ont une résistance à la traction entre 200 N/mm² et 4500 N/mm² et / ou un module élastique entre 5000 N/mm² et 230000 N/mm² et / ou un allongement à la rupture entre 5 ‰ et 150 ‰ et / ou une masse volumique spécifique entre 0,5 g/cm³ et 7,2 g/cm³.

6. Composition de matériaux de construction selon l'une quelconque des revendications 1 à 5, **caractérisée en ce que**,
par rapport au liant hydraulique, elle contient 0,01 % en poids à 3,0 % en poids d'alcool polyvinylique.

7. Composition de matériaux de construction selon l'une quelconque des revendications 1 à 6,
**caractérisée en ce que**,
par rapport au liant hydraulique, elle contient 0,01 % en poids à 1,0 % en poids d'agent moussant et / ou 0,1 % en poids à 2,0 % en poids d'agent entraîneur d'air.

8. Composition de matériaux de construction selon l'une quelconque des revendications 1 à 7,
**caractérisée en ce que**,
par rapport au liant hydraulique, elle contient 0,1 % en poids à 10,0 % en poids d'un agrégat léger et / ou d'une matière plastique poreuse, surtout de polystyrène.

9. Composition de matériaux de construction selon la revendication 8,
**caractérisée en ce que**
l'agrégat léger est choisi parmi le groupe comportant la pierre ponce naturelle, les scories de lave, le tuf, l'argile expansée, le schiste expansé, les briques concassés, le laitier ponce, la cendre volante frittée de houille, la perlite expansée, le verre expansé, la lave, la perlite et / ou la vermiculite.

10. Utilisation de la composition de matériaux de construction selon l'une quelconque des revendications 1 à 9 pour préparer un béton léger.

11. Béton léger pouvant être obtenu par mélange d'une composition de matériaux de construction selon l'une quelconque des revendications 1 à 9 avec de l'eau de gâchage.

12. Elément de construction pour une construction pouvant être obtenu en utilisant une composition de matériaux de construction selon l'une quelconque des revendications 1 à 9 et / ou en utilisant un béton léger selon la revendication 11.
